# EUROPÄISCHE PATENTSCHRIFT

(11) **EP 2 035 656 B1**
(45) Veröffentlichungstag und Bekanntmachung des Hinweises auf die Patenterteilung: **18.11.2009**
(21) Anmeldenummer: 07720174.7
(22) Anmeldetag: 01.06.2007
(51) Int. Cl.: E21B 43/10, E21B 33/10, F24J 3/08, E02D 5/38

(54) **VERFAHREN ZUR VERSIEGELUNG DER WANDUNG EINER TIEFBOHRUNG**
METHOD FOR SEALING THE WALLS OF DEEP DRILLED HOLE
PROCÉDÉ POUR SCELLER LES PAROIS D'UN SONDAGE

(30) Priorität: 03.07.2006 CH 10692006
(43) Veröffentlichungstag der Anmeldung: 18.03.2009
(73) Patentinhaber: Broder, Mathias, 7320 Sargans (CH); Dell'Anna, Marcel, 7421 Summaprada (CH)
(72) Erfinder: Broder, Mathias, 7320 Sargans (CH); Dell'Anna, Marcel, 7421 Summaprada (CH)
(74) Vertreter: Hasler, Erich
(86) Internationale Anmeldenummer: PCT/CH2007/000277
(87) Internationale Veröffentlichungsnummer: WO 2008/003184

(56) Entgegenhaltungen:
- CH-A5- 653 120
- DE-A1- 2 361 053
- GB-A- 935 797
- US-A- 3 102 599
- US-A- 5 203 173
- US-A- 5 593 623
- US-A1- 2003 221 870
- US-B1- 6 435 281

## Beschreibung

Die Erfindung betrifft ein Verfahren zur Versiegelung der Wandung einer Tiefbohrung, beispielsweise für eine Erdwärmesonde, gemäss dem Oberbegriff des Patentanspruchs 1.

Die absehbare Verknappung fossiler Energieträger und die Notwendigkeit, die Emissionen von Luftschadstoffen und von CO₂ zu reduzieren, haben in der Wärmeproduktion zu einem Umdenken geführt und der Anwendung alternativer, erneuerbarer Energien, insbesondere von schadstofffreien Technologien, zu einer grösseren Akzeptanz verholfen. Eine besonders interessante Form der Wärmeproduktion besteht in der Nutzung der Erdwärme. Erdwärme oder geothermische Energie ist die in Form von Wärme gespeicherte Energie unterhalb der Erdoberfläche. Bereits etwa 10 bis 20 m unter der Erdoberfläche weist das Erdreich eine über das ganze Jahr annähernd konstante Temperatur auf, die sich mit zunehmender Tiefe erhöht Diese Temperatur wird vom Wärmefluss aus dem Erdinneren bestimmt. Die Wärmegewinnung erfolgt in der Regel mittels Erdwärmesonden, die in eine vertikale, dicht hinterfüllte Bohrung von üblicherweise 50 bis 350 m Tiefe eingebaut werden. Die kompakte Hinterfüllung der Tiefbohrung gewährleistet einen störungsfreien Wärmefluss zwischen dem Untergrund und der Sonde und verhindert unerwünschte vertikale Sickerströmungen längs der Sonde. In der Sonde zirkuliert eine Wärmeträgerflüssigkeit, über die mit Hilfe einer Wärmepumpe dem Untergrund Wärme entzogen wird.

Die CH653120 zeigt ein Verfahren gemass dem Oberbegriff des Patentanspruchs 1.

Bei der Erstellung von Tiefbohrungen für Erdwärmesonden ist aus Gründen des Grundwasserschutzes zu vermeiden, dass verschiedene Wasserschichten mit unterschiedlichen Druckniveaus untereinander hydraulisch miteinander verbunden werden. Auch finden sich entlang der Bohrlochwandung oftmals Spalte, Risse und Klüfte, in die ein Teil des Verfüllmaterials, üblicherweise eine Mischung aus Bentonit und Zement, abfliessen kann.

Aufgabe der vorliegenden Erfindung ist es daher, ein Verfahren zu schaffen, welches es ermöglicht, in erstellten Tiefbohrungen, beispielsweise für Erdwärmesonden, wasserführende Schichten voneinander zu trennen. Weiters soll ein Verfahren geschaffen werden, durch welches ein Abfliessen des Verfüllmaterials für Erdsondenbohrungen in Spalte, Risse und Klüfte verhindert wird.

Zur Lösung dieser Aufgaben ist ein Verfahren zur Versiegelung der Wandung einer Tiefbohrung vorgeschlagen, welches die im kennzeichnenden Abschnitt des Patentanspruchs 1 angeführten Verfahrensmerkmale aufweist. Weiterbildungen und/ oder bevorzugte Verfahrensvarianten sind Gegenstand der abhängigen Patentansprüche.

Durch die Erfindung wird ein Verfahren geschaffen, bei dem die Wandung einer erstellten Tiefbohrung, beispielsweise für eine Erdwärmesonde, mit einer strumpfartig ausgebildeten, wasserundurchlässigen, elastischen Folie ausgekleidet wird. Erst danach wird das Verfüllmaterial in die Tiefbohrung eingebracht, insbesondere injiziert.

Durch das Auskleiden der Wandung der Tiefbohrung mit der strumpfartig ausgebildeten, wasserundurchlässigen, elastischen Folie wird verhindert, dass das eingebrachte Verfüllmaterial in Spalte, Risse oder Klüfte abfliesst. Die Elastizität der Folie gewährleistet, dass diese sich unter dem Druck des Verfüllmaterials ideal an die Bohrungswandung anschmiegt. Dadurch dichtet die Folie auch durchbohrte Wasserschichten ab und verhindert, dass verschiedene Wasserschichten hydraulisch miteinander verbunden werden. Das erfindungsgemässe Verfahren zur Versiegelung von Wandungen von Tiefbohrungen erlaubt die Installation von Erdwärmesonden auch in Gebieten, die bislang aus Gründen des Grundwasserschutzes als Sperrgebiete gelten.

Grundsätzlich ist es denkbar, die Auskleidung der Bohrungswandung mit der elastischen Folie bereits bei der Erstellung der Tiefbohrung vorzunehmen, oder die Bohrungswandung in einem an das Bohren anschliessenden separaten Verfahrensschritt, beispielsweise durch die Anwendung von Druckluft in die Tiefbohrung einzubringen und bis zur Bohrsohle vorzutreiben. Aus verfahrenstechnischer und verfahrensökonomischer Sicht erweist es sich jedoch als zweckmässig, die elastische Folie gleichzeitig mit der Erdwärmesonde in die Tiefbohrung einzubringen und zur Bohrsohle vorzuschieben.

In einer ersten Variante des Verfahrens ist die elastische Folie bereits integral mit der in ihrem Inneren angeordneten Erdwärmesonde ausgebildet. Dadurch wird der Vorgang des Anordnens der Erdwärmesonde in der strumpfartigen elastischen Folie vom Einbringen in die Tiefbohrung getrennt. An der Baustelle muss nur noch die angelieferte integrale Anordnung von Sonde und Folie in die Tiefbohrung eingebracht werden. Dabei können die Erdwärmesonde samt der integral verbundenen elastischen Folie als Endlos-Rollmaterial vorgelegt und für das Einbringen in die Tiefbohrung in der gewünschten Länge von einer Rolle abgerollt werden. Es versteht sich, dass für besonders tiefe Bohrungen nicht die gesamte Sonden-/Folienlänge auf einer einzigen Rolle untergebracht sein kann. In diesem Fall können vor oder während dem Einbringen in die Tiefbohrung zwei oder mehrere Rollenabschnitte an den Endstellen dicht miteinander verbunden werden, um auf die erforderliche Länge zu kommen.

Die Erdwärmesonde samt der integral damit verbundenen elastischen Folie können auch in abgelängten kürzeren Abschnitten vorgelegt werden. Die Verbindung der Abschnitte wird auf der Baustelle beim Einbringen in die Tiefbohrung durchgeführt. Diese Variante kommt insbesondere bei weniger flexiblen bzw. starren Sondenrohren zur Anwendung.

In einer alternativen Ausführungsvariante der Erfindung wird die elastische Folie getrennt von der Erdwärmesonde als ein flaches Endlos-Rollenmaterial vorgelegt. Die Endlosfolie wird gemeinsam mit der Erdsonde bzw. mit den miteinander verbundenen Erdsondenabschnitten in die Tiefbohrung eingebracht. Dabei werden die Längskanten der elastische Folie nach dem Unterbringen der Sonde flüssigkeitsdicht miteinander verbunden.

Die flüssigkeitsdichte Verbindung der elastischen Folie erfolgt durch Vernähen und/oder Verschweissen der aneinanderliegenden Bereiche in speziell dafür ausgebildeten Verbindevorrichtungen.

Als elastische Folien kommen Folien, beispielsweise Verbundfolien zum Einsatz, die aus dem Tunnelbau, der Deponieabdichttechnik bzw. vom Versetzen von Gebirgsankern mit chemisch abbindenden Mörteln her bekannt sind. Die dort gebräuchlichen Folien sind hinlänglich erprobt, und ihre Dichtigkeiten und mechanischen Festigkeiten bekannt. Vorzugsweise weist die strumpfartige, elastische Folie eine Wandstärke auf, die etwa 0,5 mm bis etwa 4 mm beträgt.

Das Anschmiegen der elastischen Folie an die Bohrungswandung erfolgt durch den vom Verfüllmaterial ausgeübten Druck. Vorzugsweise handelt es sich bei dem in die strumpfartige, elastische Folie injizierten Verfüllmaterial um eine Mischung aus Bentonit und Zement.

Weitere Vorteile und Merkmale der Erfindung ergeben sich aus der nachfolgenden Beschreibung eines Ausführungsbeispiels des Verfahrens unter Bezugnahme auf die schematischen Zeichnungen. Es zeigen in nicht massstabsgetreuen Schnittdarstellungen:
- Fig. 1: das Prinzip einer Warmwasserzubereitung mit Erdwärmesonde;
- Fig. 2: eine Tiefbohrung für eine Erdwärmesonde mit einer eingesetzten strumpfartigen elastischen Folie;
- Fig. 3: einen Querschnitt der in die Tiefbohrung eingesetzten strumpfartigen elastischen Folie aus Fig. 2 mit einer angedeuteten Erdwärmesonde;
- Fig. 4: die strumpfartige Folie aus Fig. 2 gefüllt mit einem Verfüllmaterial; und
- Fig. 5: einen Querschnitt der mit dem Verfüllmaterial gefüllten, strumpfartigen Folie aus Fig. 4 mit einer angedeuteten Erdwärmesonde.

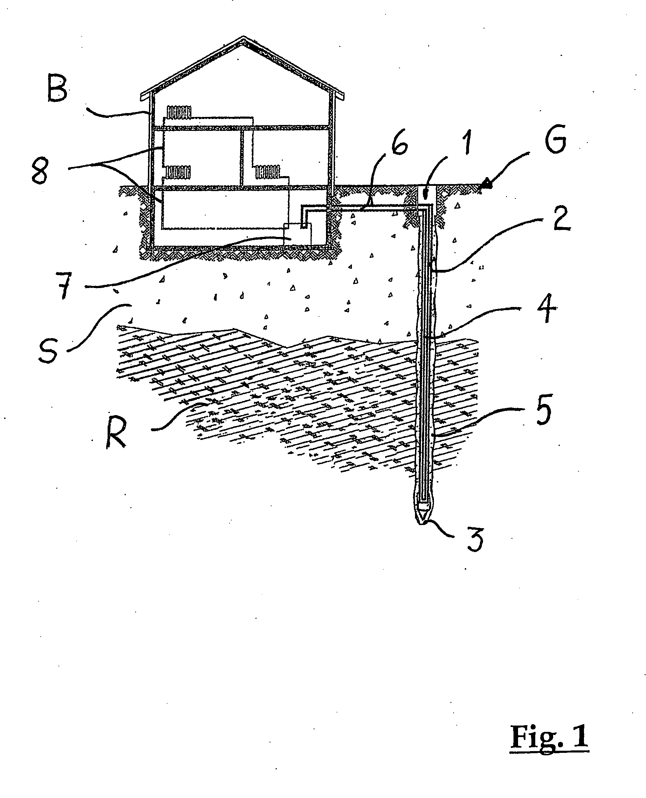

In den Darstellungen in Fig.1 bis Fig. 5 tragen gleiche Elemente bzw. Bauteile jeweils das gleiche Bezugszeichen.

Die schematische Schnittdarstellung in Fig. 1 zeigt das Prinzip der Erdwärmesondentechnologie zur Beheizung eines Gebäudes B. Dazu ist eine Erdwärmesonde 4, die in eine Tiefbohrung 1 von ca. 50 - 350 m eingesetzt ist, über eine Zuleitung 6 mit einer Wärmepumpe 7 verbunden. Die Wärmepumpe 7 versorgt ein Heizungssystem 8 des Gebäudes B mit der erforderlichen Menge Warmwasser. Die in die Tiefbohrung 1 eingesetzte Erdwärmesonde 4 ist ein Wärmetauscher, in dem eine Flüssigkeit zirkuliert. Oft handelt es sich dabei um ein oder zwei U-Rohre aus Polyethylen, die bis zum Grund 3 der Bohrung 1 eingebracht werden. Die PE-Rohre weisen beispielsweise Durchmesser von 32 mm oder 40 mm auf. Der zwischen der Erdwärmesonde 4 und der Bohrungswandung 2 verbliebene Hohlraum wird mit einem Verfüllmaterial, das beispielsweise aus einer Mischung aus Bentonit und Zement besteht, kompakt hinterfüllt, um einen guten thermischen Kontakt zwischen den Rohren der Erdwärmesonde 4 und der Bohrungswandung 2 sicherzustellen. Als Verfüllmaterial kommen auch andere Materialien in Frage, die eine ausreichend gute Wärmeübertragung gewährleisten. Beispielsweise ist auch eine Verfahrenvariante bekannt, bei der als Verfüllmaterial Wasser eingesetzt wird. Die in den Rohren zirkulierende Flüssigkeit, meist Wasser mit einem Anteil von 15 - 20% Antigel, entzieht dem Untergrund G Erdwärme und versorgt mit dieser geothermischen Energie die Wärmepumpe 7. Mit der Wärmepumpe 7 wird die Temperatur dann auf das für Heizzwecke erforderliche Niveau angehoben. In Fig. 1 ist auch noch angedeutet, dass sich der Untergrund G meist aus oberflächennäherem weicherem Erdreich S und harten Felschichten R zusammensetzt. Die Tiefbohrung 1 wird bis in die harten Felsschichten vorgetrieben, da dort die stabilsten, nur von der Bohrungstiefe abhängigen Temperaturverhältnisse anzutreffen sind.

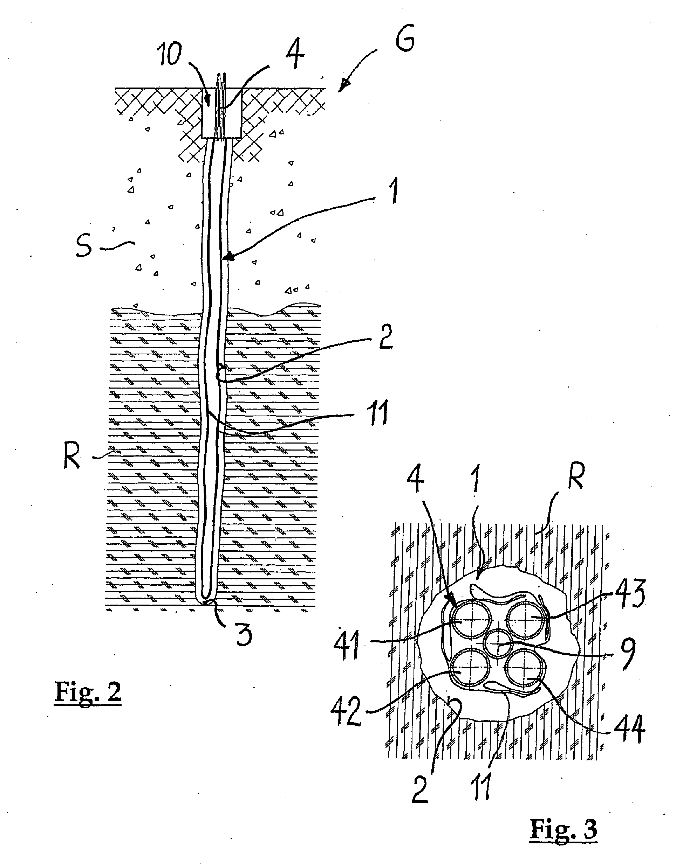

Fig. 2 zeigt die im Untergrund G erstellte Tiefbohrung 1 in grösserem Massstab. Mit S sind die oberflächennäheren weicheren Schichten angedeutet. R bezeichnet den harten, üblicherweise felsigen Untergrund. Aus Gründen der Übersichtlichkeit wurde auf die Darstellung von Rissen, Klüften und Spalten im Untergrund G verzichtet. Auch wurde darauf verzichtet, wasserführende Schichten darzustellen, die allenfalls von der Tiefbohrung 1 durchstossen werden. Die Bohrungswandung trägt das Bezugszeichen 2, der Grund der Bohrung ist mit 3 bezeichnet. Die Tiefbohrung 1 mündet in einen Zugangsschacht 10, in dem ein Abschnitt der Erdwärmesonde 4 angedeutet ist. Aus Gründen der besseren Übersichtlichkeit wurde auf die Darstellung der Erdwärmesonde innerhalb der Tiefbohrung 1 verzichtet. Fig. 2 zeigt eine strumpfartigen Schlauch 11, der sich bis zum Grund 3 der Bohrung 1 erstreckt. Der strumpfartige Schlauch 11 besteht aus einer elastischen Folie aus einem wasserundurchlässigen Material, wie es beispielsweise aus dem Tunnelbau, der Deponieabdichttechnik bzw. vom Versetzen von Gebirgsankern mit chemisch abbindenden Mörteln her bekannt ist. Die Folie weist eine Wandstärke von etwa 0,5 mm bis etwa 4 mm auf. Die strumpfartige Folie 11 wird üblicherweise gleichzeitig mit der Erdwärmesonde 4 in Richtung des Grunds 3 der Bohrung 1 vorgeschoben. Dabei kann die Folie als Endlos- Rollenmaterial vorgelegt werden und erst unmittelbar vor dem oder beim Einbringen in die Bohrung zu einem strumpfartigen Schlauch zusammengefügt, beispielsweise vernäht oder verschweisst, werden. Alternativ kann die Folie auch bereits integral mit der Erdwärmesonde ausgebildet sein. Dabei können die Erdwärmesonde und die integral damit verbundene Folie ebenfalls als Rollenmaterial vorliegen. Die Erdwärmesonde kann gemeinsam mit der integral damit verbundenen Folie auch in abgelängen Abschnitten vorliegen. Die Abschnitte werden dann erst unmittelbar vor dem oder beim Einsetzen in die Bohrung miteinander verbunden, beispielsweise miteinander verschweisst.

In Fig. 3 ist ein Querschnitt der Tiefbohrung 1 im felsigen Untergrund R dargestellt. Aus der Darstellung ist ersichtlich, dass die strumpfartige elastische Folie 11 die Erdwärmesonde 4 vollständig umhüllt. Bei der Erdwärmesonde 4 handelt es sich dabei beispielsweise um eine 4-fach Sonde mit vier Rohren 41, 42, 43, 44 aus Polyethylen. Die vier Rohre 41 - 44 sind innerhalb der geschlossenen strumpfartigen Folie 11 angeordnet. Die strumpfartige Folie 11 ist in Falten gelegt, damit sie leichter in die Bohrung 1 einsetzbar ist, andererseits genügend Material vorhanden ist, wenn sie in Richtung der Bohrungswandung 2 erweitert wird. Auf diese Weise wird eine Überdehnung der strumpfartigen, elastischen Folie 11 verhindert. Die Aufweitung der strumpfartigen Folie 11 erfolgt durch ein Verfüllmaterial, welches über ein Füllrohr 9 in die Bohrung 1 eingebracht wird, das innerhalb der Sondenrohre 41 - 44 angeordnet ist und sich innerhalb der strumpfartigen Folie 11 bis zum Grund der Bohrung 1 erstreckt.

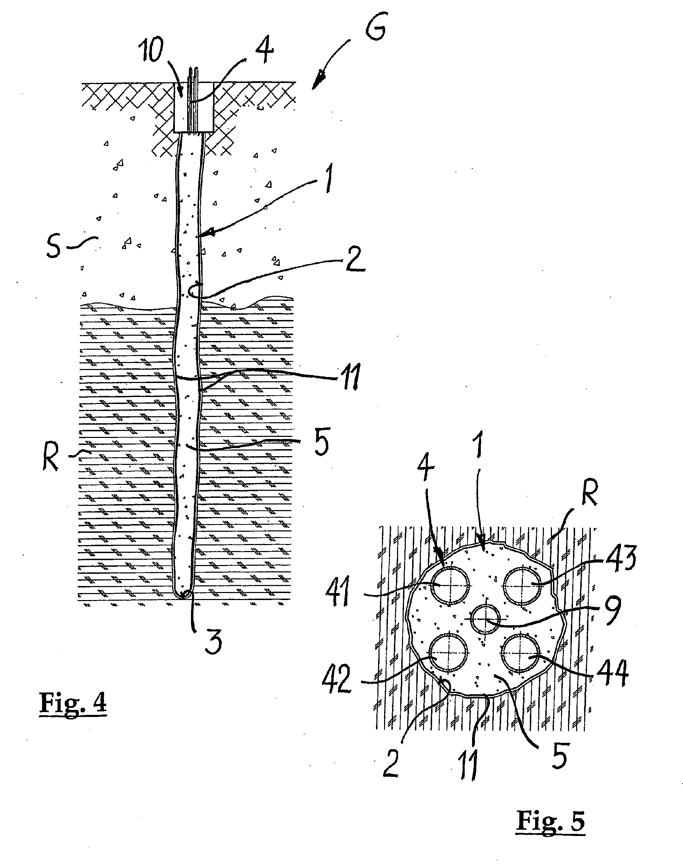

Fig. 4 ist eine zu Fig. 2 analoge Darstellung und zeigt die durch ein in die Tiefbohrung 1 eingebrachtes Verfüllmaterial 5 aufgeweitete strumpfartige elastische Folie 11. Die Erdwärmesonde 4, die nur im Zugangsschacht 10 angedeutet ist, erstreckt sich innerhalb der strumpfartigen elastischen Folie 11 bis zum Grund 3 der Bohrung 1 und ist kompakt in das Verfüllmaterial 5 eingebettet. Das Verfüllmaterial ist meist ein Mischung aus Bentonit und Zement und gewährleistet eine gute Wärmeübertragung von der Bohrungswandung 2 zur Erdwärmesonde 4. Infolge ihrer Elastizität schmiegt sich die strumpfartige Folie 11 an die Bohrungswandung 2 und gleicht sie sich völlig der Kontur der Bohrung 1 an. Dabei verschliesst die strumpfartige Folie 11 Risse, Klüfte oder Spalten im Untergrund G und dichtet sogar wasserführende Schichten ab. Eine hydraulische Verbindung zwischen verschiedenen Wasserhorizonten wird dadurch zuverlässig verhindert. Das Verfüllmaterial 5 befindet sich innerhalb der strumpfartigen Folie 11 und wird von dieser zurückgehalten. Dadurch wird ein Abfliessen eines Teils des Verfüllmaterials 5 in Risse, Klüfte oder Spalten im Untergrund G verhindert.

Die Querschnittsdarstellung in Fig. 5 entspricht derjenigen in Fig. 3 und zeigt die vom Verfüllmaterial 5 aufgeweitete strumpfartige Folie 11. Infolge ihrer Elastizität passt sich die strumpfartige Folie 11 ideal der Umfangskontur der Bohrung 1 an und schmiegt sie sich abdichtend gegen die Bohrungswandung 2. Die vier Rohre 41 - 44 der Erdwärmesonde 4 sind kompakt in das Verfüllmaterial 5 eingebettet. Das Füllrohr 9, über welches das Verfüllmaterial 5 zum Bohrlochgrund gefördert und ausgehend von dort die Bohrung 1 auffüllt, verbleibt üblicherweise innerhalb der Bohrung 1.

Durch das Auskleiden der Wandung 2 der Tiefbohrung 1 mit der strumpfartig ausgebildeten, wasserundurchlässigen, elastischen Folie 11 wird verhindert, dass das eingebrachte Verfüllmaterial 5 in Spalte, Risse oder Klüfte abfliesst. Die Elastizität der Folie 11 gewährleistet, dass diese sich unter dem Druck des Verfüllmaterials 11 ideal an die Bohrungswandung 2 anschmiegt. Dadurch dichtet die strumpfartige Folie 11 auch durchbohrte Wasserschichten ab und verhindert, dass verschiedene Wasserschichten hydraulisch miteinander verbunden werden. Das erfindungsgemässe Verfahren zur Versiegelung von Wandungen 2 von Tiefbohrungen 1 erlaubt die Installation von Erdwärmesonden 4 auch in Gebieten, die bislang aus Gründen des Grundwasserschutzes als Sperrgebiete gelten.

## Patentansprüche

1. Verfahren zur Versiegelung der Wandung (2) einer Tiefbohrung (1), beispielsweise für Erdwärmesonden (4), bei dem zunächst eine Tiefbohrung (1) des erforderlichen Durchmessers erstellt, eine Erdwärmesonde (4) in die Tiefbohrung (1) eingebracht und danach die Bohrung (1) mit einem Verfüllmaterial (5) kompakt hinterfüllt wird, **dadurch gekennzeichnet, dass** vor dem Hinterfüllen der Tiefbohrung (1) mit dem Verfüllmaterial (5) die Bohrungswandung (2) mit einer strumpfartig ausgebildeten, wasserundurchlässigen, elastischen Folie (11) ausgekleidet wird.

2. Verfahren nach Anspruch 1, **dadurch gekennzeichnet, dass** die elastische Folie (11) gleichzeitig mit der Erdwärmesonde (4) in die Tiefbohrung (1) eingebracht und zum Grund (3) der Bohrung (1) vorgeschoben wird.

3. Verfahren nach Anspruch 2, **dadurch gekennzeichnet, dass** die elastische Folie (11) bereits integral mit der in ihrem Inneren angeordneten Erdwärmesonde (4) ausgebildet ist.

4. Verfahren nach Anspruch 3, **dadurch gekennzeichnet, dass** die Erdwärmesonde (4) mit der integral damit verbundenen elastischen Folie (11) als Endlos-Rollmaterial vorgelegt und für das Einbringen in die Tiefbohrung (1) in der gewünschten Länge von einer Rolle abgerollt wird.

5. Verfahren nach Anspruch 3, **dadurch gekennzeichnet, dass** die Erdwärmesonde (4) mit der integral damit verbundenen elastischen Folie (11) in abgelängten Abschnitten vorgelegt wird und die Abschnitte beim Einbringen in die Bohrung (1) flüssigkeitsdicht miteinander verbunden werden.

6. Verfahren nach Anspruch 2, **dadurch gekennzeichnet, dass** die elastische Folie (11) getrennt von der Erdwärmesonde (4) als ein flaches Endlos-Rollenmaterial vorgelegt und gemeinsam mit der Erdsonde (4) bzw. den miteinander verbundenen Erdsondenabschnitten in die Tiefbohrung (1) eingebracht wird, wobei die Längskanten der elastische Folie miteinander flüssigkeitsdicht verbunden werden.

7. Verfahren nach Anspruch 5 oder 6, **dadurch gekennzeichnet, dass** die flüssigkeitsdichte Verbindung der elastischen Folie (11) durch Vernähen und/oder Verschweissen erfolgt.

8. Verfahren nach einem der vorangehenden Ansprüche, **dadurch gekennzeichnet, dass** als elastische Folie (11) eine aus dem Tunnelbau, der Deponieabdichttechnik bzw. vom Versetzen von Gebirgsankern mit chemisch abbindenden Mörteln bekannte Folie, beispielsweise eine Verbundfolie, gewählt wird.

9. Verfahren nach einem der vorangehenden Ansprüche, **dadurch gekennzeichnet, dass** die strumpfartige, elastische Folie (11) eine Wandstärke aufweist, die etwa 0,5 mm bis etwa 4 mm beträgt

10. Verfahren nach einem der vorangehenden Ansprüche, **dadurch gekennzeichnet, dass** das in die strumpfartige, elastische Folie (11) injizierte Verfüllmaterial (5) eine Mischung aus Bentonit und Zement ist.

## Claims

1. A method for sealing the wall (2) of a deep borehole (1), for example for borehole heat exchangers (4), with which firstly a deep borehole (1) of the necessary diameter is created, a borehole heat exchanger (4) is introduced into the deep borehole (1) and thereafter the borehole (1) is filled in in a compact manner with a filling material (5), **characterised in that** the borehole wall (2) is lined with a water-impermeable, elastic film (11) designed in a stocking-like manner, before filling-in of the deep borehole with the filling material (5).

2. A method according to claim 1, **characterised in that** the elastic film (11) is introduced into the deep borehole (1) simultaneously with the borehole heat exchanger (4), and advanced to the base (3) of the bore (1).

3. A method according to claim 2, **characterised in that** the elastic film (11) is designed already integrally with the borehole heat exchanger (4) arranged in its inside.

4. A method according to claim 3, **characterised in that** the borehole heat exchanger (4) with the elastic film (11) integrally connected thereto is present as an endless roll material, and is rolled from a roll in the desired length for the introduction into the deep borehole (1).

5. A method according to claim 3, **characterised in that** the borehole heat exchanger (4) with the elastic film (11) integrally connected thereto is present in cut to length sections, and the sections are connected to one another in a fluid-tight manner on introduction into the borehole (1).

6. A method according to claim 2, **characterised in that** the elastic film (11) is present separate from the borehole heat exchanger (4) as a flat, endless roll material, and together with the borehole heat exchanger (4) or with the borehole heat exchanger sections connected to one another, is introduced into the deep borehole (1), wherein the longitudinal edges of the elastic film are connected to one another in a fluid-tight manner.

7. A method according to claim 5 or 6, **characterised in that** the fluid-tight connection of the elastic film (11) is effected by way of sewing and/or welding.

8. A method according to one of the preceding claims, **characterised in that** a film, for example composite film, which is known from tunnel construction, landfill sealing technology or for displacement of rock bolts with chemically setting mortars, is selected as an elastic film (11).

9. A method according to one of the preceding claims, **characterised in that** the stocking-like, elastic film (11) has a wall thickness which is about 0.5 mm to about 4 mm.

10. A method according to one of the previous claims, **characterised in that** the filling material (5) injected into the stocking-like, elastic film (11) is a mixture ofbentonite and cement.

## Revendications

1. Procédé pour le scellement de la paroi (2) d'un forage profond (1), par exemple pour des sondes géothermiques (4), pour lequel il est tout d'abord réalisé un forage profond (1) du diamètre nécessaire, une sonde géothermique (4) est mise en place dans le forage profond (1) et ensuite le forage (1) est remblayé de manière compacte avec un matériau de remplissage (5), **caractérisé en ce que** la paroi du forage (2) est revêtue, avant le remblayage du forage profond (1) avec le matériau de remplissage (5), d'une feuille élastique (11) imperméable, configurée comme un bas.

2. Procédé selon la revendication 1, **caractérisé en ce que** la feuille élastique (11) est mise en place dans le forage profond (1) en même temps que la sonde géothermique (4) et est poussée jusqu'au fond (3) du forage (1).

3. Procédé selon la revendication 2, **caractérisé en ce que** la feuille élastique (11) est configurée déjà intégrée avec la sonde géothermique (4) placée en son intérieur.

4. Procédé selon la revendication 3, **caractérisé en ce que** la sonde géothermique (4) avec la feuille élastique qui lui est reliée en étant intégrée (11) est présentée comme matériau en rouleau sans fin et est déroulée à la longueur désirée à partir d'un rouleau pour la mise en place dans le forage profond (1).

5. Procédé selon la revendication 3, **caractérisé en ce que** la sonde géothermique (4) avec la feuille élastique qui lui est reliée en étant intégrée est présentée en sections coupées à longueur et les sections sont reliées l'une à l'autre étanches au liquide lors de la mise en place dans le forage (1).

6. Procédé selon la revendication 2, **caractérisé en ce que** la feuille élastique (11) est présentée séparément de la sonde géothermique (4) comme un matériau en rouleau sans fin plat et est mise en place dans le forage profond (1) ensemble avec la sonde géothermique (4) ou les sections de sonde géothermique reliées l'une à l'autre, les arêtes de longueur de la feuille élastique étant reliées l'une à l'autre étanches au liquide.

7. Procédé selon la revendication 5 ou 6, **caractérisé en ce que** la jonction étanche au liquide de la feuille élastique (11) se fait par couture et/ou soudure.

8. Procédé selon l'une des revendications précédentes, **caractérisé en ce que** comme feuille élastique (11) on choisit une feuille avec des mortiers à prise chimique connue de la construction de tunnels, de la technique d'étanchement des décharges ou du déplacement de tirants d'ancrage dans les massifs rocheux, par exemple une feuille composite.

9. Procédé selon l'une des revendications précédentes, **caractérisé en ce que** la feuille élastique de type bas (11) présente une épaisseur de paroi qui est d'environ 0,5 mm à environ 4 mm.

10. Procédé selon l'une des revendications précédentes, **caractérisé en ce que** le matériau de remplissage (5) injecté dans la feuille élastique de type bas (11) est un mélange de bentonite et de ciment.
